(19) Europäisches Patentamt
European Patent Office
Office européen des brevets

(11) Veröffentlichungsnummer: **0 573 787 A1**

(12) **EUROPÄISCHE PATENTANMELDUNG**

(21) Anmeldenummer: **93107411.6**

(22) Anmeldetag: **07.05.93**

(51) Int. Cl.5: **C08L 77/00**, C08K 5/09

(30) Priorität: **15.05.92 DE 4216042**

(43) Veröffentlichungstag der Anmeldung:
**15.12.93 Patentblatt 93/50**

(84) Benannte Vertragsstaaten:
**BE CH DE FR GB LI NL**

(71) Anmelder: **BASF Aktiengesellschaft**
**Carl-Bosch-Strasse 38**
**D-67063 Ludwigshafen(DE)**

(72) Erfinder: **Goetz, Walter, Dr.**
**Dhauner Strasse 79**
**W-6700 Ludwigshafen(DE)**
Erfinder: **Betz, Walter, Dr.**
**Weimarer Strasse 45**
**W-6700 Ludwigshafen(DE)**

(54) **Thermoplastische Formmassen auf der Basis von Polyamiden und carboxylgruppenhaltigen Polyethylenwachsen.**

(57) Thermoplastische Formmassen, erhältlich durch Einmischen von

A) 0,5 bis 5 Gew.-% eines carboxylgruppenhaltigen Polyethylenwachses mit einem mittleren Molekulargewicht $\overline{M}_n$ (Zahlenmittelwert) von 500 bis 20 000
und
B) 0 bis 50 Gew.-% faser- oder teilchenförmige Füllstoffe oder deren Mischungen
in eine Schmelze von
C) 40 bis 99,5 Gew.-% eines Polyamid-Präpolymeren mit einer Viskositätszahl von 40 bis 80 ml/g
und anschließender Nachkondensation in fester Phase.

EP 0 573 787 A1

Die vorliegende Erfindung betrifft thermoplastische Formmassen, erhältlich durch Einmischen von

A) 0,5 bis 5 Gew.-% eines carboxylgruppenhaltigen Polyethylenwachses mit einem mittleren Molekulargewicht $\overline{M}_n$ (Zahlenmittelwert) von 500 bis 20000 und

B) 0 bis 50 Gew.-% faser- oder teilchenförmige Füllstoffe oder deren Mischungen

in eine Schmelze von

C) 40 bis 99,5 Gew.-% eines Polyamid-Präpolymeren mit einer Viskositätszahl von 40 bis 80 ml/g

und anschließender Nachkondensation in fester Phase.

Außerdem betrifft die Erfindung Verfahren zur Herstellung dieser thermoplastischen Formmassen, deren Verwendung zur Herstellung von Fasern, Folien und Formkörpern sowie die hierbei erhältlichen Formkörper.

Polyamide wie Poly-$\epsilon$-Caprolactam und Polyhexamethylenadipinsäureamidzählen zu den seit langem bekannten technischen Kunststoffen und haben auf vielen Gebieten Anwendung gefunden. Sie zeichnen sich im allgemeinen durch eine große Härte, Steifigkeit und eine gute Wärmeformbeständigkeit aus, sind darüber hinaus widerstandsfähig gegen Abrieb und Verschleiß und auch beständig gegen viele Chemikalien sowie schwer entflammbar.

Bei der Verarbeitung von Polyamiden, insbesondere beim Spritzguß, werden i.a. zur Verbesserung des Einzugs-, Fließ- und Entformungsverhaltens Schmiermittel zugesetzt.

So beschreibt die DE-A 37 06 356 ein Polyamid-Granulat mit einer äußeren Schmiermittelbeschichtung aus Zn-, Al- und Ca-Stearat sowie $C_2$- bis $C_{24}$-Estern aliphatischer Carbonsäuren mit 6 bis 24 C-Atomen.

Aus der DE-A 23 49 835 ist der Zusatz von Ca- oder Zn-Stearat zu Polyamid-Formmassen bekannt.

Der Zusatz dieser Schmiermittel führt jedoch zu einem Molekulargewichtsabbau, verbunden mit einem Zähigkeitsverlust bei der Verarbeitung von Polyamiden, besonders bei höherer Temperatur. Dieser Effekt tritt insbesondere bei hochschmelzenden Polyamiden wie Copolyamiden aus $\epsilon$-Caprolactam, Hexamethylendiamin und Terephthalsäure sowie aus Tetramethylendiamin und Adipinsäure auf. Aber auch bei Polyamiden aus Hexamethylendiamin und Adipinsäure zeigen sich, speziell beim Zusatz von Al-Stearat, diese Nachteile. Weiterhin führt der Zusatz dieser Schmiermittel dazu, daß die Polyamide nicht mehr schwer entflammbar sind.

Die Verwendung von Stearinsäure, Stearylstearat, Pentaerythritester, Diglycolester von langkettigen Fettsäuren, Palmitinsäure, Behensäure und Derivaten hiervon als Schmiermittel ist ebenfalls bekannt. Diese Verbindungen weisen ebenfalls die oben genannten Nachteile auf.

Arbeitet man diese Schmiermittel in eine Schmelze von Polyamid-Präpolymeren mit einer Viskositätszahl von 40 bis 80 ml/g ein und unterwirft diese Mischung - zum Erreichen der für technische Anwendungen notwendigen Viskositätszahlen von mindestens 140 ml/g - einer thermischen Nachbehandlung (Temperung), so werden sie bei den vorherrschenden Verarbeitungstemperaturen extrahiert und somit wirkungslos.

Als Schmiermittel, die nicht auf Derivaten langkettiger Fettsäuren basieren sind beispielsweise Polytetrafluorethylen, Molybdänsulfid und Graphit zu nennen. Nachteilig wirken sich hier insbesondere die dunkle Eigenfarbe sowie wirtschaftliche und gesundheitliche Gesichtspunkte aus.

Die DD-A 234 684 beschreibt die Zugabe von Polyethylenwachsen und Pigmenten zu Polyamiden direkt vor der Formteilherstellung.

Aus der DE-A 23 48 840 ist der Zusatz von geringen Mengen carboxylierter Polyethylenwachse zu Polyamiden bekannt.

In der EP-A 54 761 wird eine Mischung aus Ethylen-Carbonsäure-Copolymeren niedrigen Molekulargewichts und Polyamiden beschrieben.

Diese Herstellverfahren führen jedoch zu Produkten, die leicht entflammbar sind.

Aufgabe der vorliegenden Erfindung war es daher, thermoplastische Formmassen auf der Basis von Polyamid zur Verfügung zu stellen, die die vorstehend geschilderten Nachteile nicht aufweisen und die sich vor allem durch gute Fließfähigkeit und Schwerentflammbarkeit - auch ohne Zusatz spezieller Flammschutzmittel - auszeichnen.

Diese Aufgabe wird erfindungsgemäß durch die eingangs definierten thermoplastischen Formmassen gelöst.

Weiterhin wurden Verfahren zur Herstellung dieser thermoplastischen Formmassen, deren Verwendung zur Herstellung von Fasern, Folien und Formkörpern sowie die hierbei erhältlichen Formkörper gefunden.

Als Komponente A) enthalten die erfindungsgemäßen thermoplastischen Formmassen 0,5 bis 5 Gew.-%, bevorzugt 1,5 bis 2,5 Gew.-%, eines carboxylgruppenhaltigen Polyethylenwachses.

Diese Polyethylenwachse weisen mittlere Molekulargewichte $\overline{M}_n$ (Zahlenmittelwert) von 500 bis 20 000 auf, bevorzugt 2000 bis 15 000, insbesondere 5000 bis 10 000, was einer Schmelzviskosität von 0,3 bis 25, bevorzugt 0,8 bis 15, insbesondere 1 bis 10 Pa.s bestimmt im Kegel-Platte-Viskosimeter (bei 280°C und

EP 0 573 787 A1

einem Schergefälle von 100 s⁻¹) entspricht.

Bei diesen carboxylgruppenhaltigen Polyethylenwachsen kann es sich um Copolymere von Ethylen mit $\alpha,\beta$-ungesättigten Carbonsäuren, beispielsweise Acrylsäure, handeln, oder auch um Polyethylene, auf die Carboxylgruppen, beispielsweise aus Acrylsäure oder Maleinsäureanhydrid, aufgepfropft werden. Die Polyethylene können nach dem Hoch-, Mittel- oder Niederdruckverfahren hergestellt werden. Es können sowohl Polyethylene hoher Dichte (HDPE) (Bereich von 0,94 bis 0,97 g/cm³), bevorzugt hergestellt nach dem sog. PhillipsVerfahren (Mitteldruckverfahren), als auch Polyethylene niedriger Dichte (LDPE) (Bereich von 0,91 bis 0,94 g/cm³), insbesondere lineare Polyethylene niedriger Dichte, bevorzugt hergestellt nach dem Gasphasenverfahren, eingesetzt werden.

Ebenfalls möglich ist es, die Polyethylenwachse zu oxidieren, beispielsweise mit Ozon, wobei bevorzugt die Methylendgruppen der Polyethylene zu Carboxylgruppen oxidiert werden.

Die als Komponente A) eingesetzten Polyethylenwachse sind an sich bekant oder nach bekannten Verfahren herstellbar. Auch im Handel sind entsprechende Produkte z.B. unter den Bezeichnungen Hoechst-Wachs® PED 191 (Hoechst AG), HoechstWachs® H 12 (Hoechst AG) sowie Poligen® EAS-1 (BASF Aktiengesellschaft) erhältlich.

Es können auch Mischungen verschiedener carboxylgruppenhaltigen Polyethylenwachse als Komponente A) eingesetzt werden.

Als Komponente B) können die erfindungsgemäßen thermoplastischen Formmassen übliche Zusatzstoffe und Verarbeitungshilfsmittel wie Stabilisatoren, Oxidationsverzögerer, Mittel gegen Wärmezersetzung und Zersetzung durch ultraviolettes Licht, Entformungsmittel, Färbemittel wie Farbstoffe und Pigmente, faser- und pulverförmige Füll- und Verstärkungsmittel, Keimbildungsmittel, Weichmacher usw. enthalten, deren Anteil in der Regel nicht mehr als 50 Gew.-% beträgt.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im allgemeinen in Mengen bis zu 2 Gew. -%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern , Glasfasern, amorphe Kieselsäure, Asbest, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 50 Gew.-%, bevorzugt 20 bis 35 Gew.-%.

Als Keimbildungsmittel können z.B. Talkum, Calciumfluorid, Natriumphenylphosphinat, Aluminiumoxid und feinteiliges Polytetrafluorethylen eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Zur weiteren Verbesserung der Schwerentflammbarkeit können alle für Polyamide bekannten Flammschutzmittel zugegeben werden, insbesondere solche auf Basis von Phosphorverbindungen bzw. roter Phosphor selbst.

Als Komponente C) enthalten die erfindungsgemäßen thermoplastischen Formmassen 40 bis 99,5 Gew.-%, bevorzugt 92 bis 99 Gew.-%, insbesondere 97,5 bis 98,5 Gew.-% eines Polyamid-Präpolymeren mit einer Viskositätszahl von 40 bis 80 ml/g, bevorzugt 45 bis 60 ml/g, gemessen an einer 0,5 gew.-%igen Lösung in konzentrierter Schwefelsäure bei 23°C.

Als Polyamide, die zur Herstellung der Komponente C) verwendet werden können, sind thermoplastische teilkristalline Polyamide zu nennen.

Geeignete Polyamide können z.B. durch Kondensation äquimolarer Mengen einer gesättigten Dicarbonsäure mit 4 bis 12 Kohlenstoffatomen mit einem Diamin, welches 4 bis 14 Kohlenstoffatome aufweist oder durch Kondensation von $\omega$-Aminocarbonsäuren oder Polyaddition von Lactamen hergestellt werden.

Beispiele für Polyamide sind Polyhexamethylenadipinsäureamid, Polyhexamethylenazelainsäureamid, Polyhexamethylensebacinsäureamid, Polyhexamethylendodecandisäureamid, Polytetramethylenadipinsäureamid und die durch Ringöffnung von Lactamen erhaltenen Polyamide wie Polycaprolactam und Polylaurinsäurelactam.

3

In der Regel sind diese teilkristallinen Polyamide linear.

Besonders bevorzugt sind Polytetramethylenadipinsäureamid, Polyhexamethylenadipinsäureamid, Polyhexamethylensebacinsäureamid und Polycaprolactam sowie Copolyamide aus Terephthalsäure, Hexamethylendiamin und ε-Caprolactam oder aus Terephthalsäure, Isophthalsäure, ggf. Adipinsäure und Hexamethylendiamin mit mehr als 50 Gew. -% Terephthalsäure/Hexamethylendiamin-Einheiten; insbesondere Polyhexamethylenadipinsäureamid und Polycaprolactam. Es können jedoch auch Mischungen verschiedener Polyamide verwendet werden.

Die Herstellung der Polyamid-Präpolymeren mit einer Viskositätszahl von 40 bis 80 ml/g (Komponente C) kann nach den in den EP-A 129 195 und 129 196 beschriebenen Verfahren erfolgen.

Gemäß diesen Verfahren wird eine wäßrige Lösung der Monomeren unter erhöhtem Druck und unter gleichzeitiger Verdampfung von Wasser und Bildung eines Präpolymeren auf eine Temperatur von 250 bis 300°C erhitzt, anschließend werden Präpolymere und Dampf kontinuierlich getrennt, der Dampf rektifiziert und die mitgeführten Diamine zurückgeleitet. Schließlich wird das Präpolymer in eine Polykondensationszone geleitet und unter einem Überdruck von 1 bis 10 bar und einer Temperatur von 250 bis 300°C polykondensiert. Wesentlich ist bei dem Verfahren, daß die wäßrige Salzlösung unter einem Überdruck von 1 bis 10 bar innerhalb einer Verweilzeit von weniger als 60 Sekunden erhitzt wird, wobei bei Austritt aus der Verdampferzone der Umsetzungsgrad vorteilhaft mindestens 93 % und der Wassergehalt des Präpolymeren höchstens 7 Gew.-% beträgt.

Durch diese kurzen Verweilzeiten wird die Bildung von Triaminen weitgehend verhindert.

Die verwendeten wäßrigen Lösungen haben in der Regel einen Monomergehalt von 30 bis 70 Gew.-%, insbesondere von 40 bis 65 Gew.-%.

Die wäßrige Salzlösung wird vorteilhaft mit einer Temperatur von 50 bis 100°C kontinuierlich in eine Verdampferzone geleitet, wo die wäßrige Salzlösung unter einem Überdruck von 1 bis 10, vorzugsweise von 2 bis 6 bar auf eine Temperatur von 250 bis 330°C erhitzt wird. Es versteht sich, daß die angewandte Temperatur über dem Schmelzpunkt des jeweils herzustellenden Polyamids liegt.

Wie bereits erwähnt, ist es wesentlich, daß die Verweilzeit in der Verdampferzone maximal 60 Sekunden, vorzugsweise 10 bis 55 Sekunden und insbesondere 10 bis 40 Sekunden beträgt.

Der Umsatz beim Austritt aus der Verdampferzone beträgt mindestens 93, vorzugsweise 95 bis 98 % und der Wassergehalt liegt vorzugsweise im Bereich von 2 bis 5, insbesondere 1 bis 3 Gew.-%.

Die Verdampferzone ist vorteilhaft als Röhrenbündel ausgebildet. Besonders bewährt haben sich Röhrenbündel, in denen der Querschnitt der einzelnen Röhren periodisch wiederkehrend rohrförmig und spaltförmig ausgebildet ist.

Ferner hat es sich als vorteilhaft erwiesen, das Gemisch aus Präpolymeren und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, z.B. Füllkörper wie Raschigringe, Metallringe oder insbesondere Füllkörper aus Drahtnetz, bewirken eine große Oberfläche. Hierdurch werden die Phasen, d.h. Präpolymeres und Dampf, innig in Berührung gebracht. Dies bewirkt, daß die Menge des mit Wasserdampf freigesetzten Diamins erheblich vermindert wird. In der Regel hält man in der Stoffaustauschzone eine Verweilzeit von 1 bis 15 Minuten ein. Die Stoffaustauschzone ist vorteilhaft als Röhrenbündel ausgebildet.

Das aus der Verdampferzone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Diaminen, die bei dem Verdampfen des Wassers freigesetzt wurden. Diese Brüden werden in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter den identischen Druckbedingungen wie die Verdampferzone betrieben. Die in den Brüden enthaltenen Diamine werden hierbei abgetrennt und wieder der Verdampferzone zugeführt. Es ist auch möglich, die Diamine der nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht, wird in eine Polymerisationszone geleitet. In der Polymerisationszone wird die anfallende Schmelze bei einer Temperatur von 250 bis 330°C, insbesondere 270 bis 310°C, und unter einem Ünerdruck von 1 bis 10 bar, insbesondere 2 bis 6 bar, polykondensiert. Vorteilhaft werden die hierbei freiwerdenden Dämpfe zusammen mit den obengenannten Brüden in der Kolonne rektifiziert, vorzugsweise hält man in der Polykondensationszone eine Verweilzeit von 5 bis 30 Minuten ein. Das so erhaltene Polyamid-Präpolymere, das in der Regel

4

eine Viskositätszahl von 40 bis 80 ml/g, bevorzugt von 45 bis 60 ml/g, gemessen an einer 0,5 gew.-%igen Lösung in 96 %iger Schwefelsäure bei 23°C, aufweist, wird kontinuierlich aus der Kondensationszone entnommen.

Nach einer bevorzugten Arbeitsweise leitet man das so erhaltene Polyamid-Präpolymere schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat (Komponente C) wird bei etwa 20°C über dem Schmelzpunkt der Komponente C) (im Falle von Polyhexamethylenadipamid bei etwa 280°C), bevorzugt in einem Doppelschneckenextruder aufgeschmolzen und mit dem carboxylgruppenhaltigen Polyethylenwachs (Komponente A) und gegebenenfalls der Komponente B) gemischt, als Strang ausgetragen, gekühlt und granuliert.

In einer besonders bevorzugten Ausführungsform ist es auch möglich, die Komponente A) und gegebenenfalls B) schon in den Entgasungsextruder zu geben, wobei in diesem Fall der Entgasungsextruder üblicherweise mit geeigneten Mischelementen, wie Kneter, ausgestattet ist. Anschließend wird ebenfalls als Strang extrudiert, gekühlt und granuliert.

Dieses Granulat wird in fester Phase unter Inertgas kontinuierlich oder diskontinuierlich bei einer Temperatur unterhalb des Schmelzpunktes, z.B. von 170 bis 240°C, bis zur gewünschten Viskosität kondensiert. Für die diskontinuierliche Festphasenkondensation können z.B. Taumeltrockner, für die kontinuierliche Festphasenkondensation mit heißem Inertgas durchströmte Temperrohre verwendet werden. Bevorzugt wird die kontinuierliche Festphasenkondensation, wobei als Inertgas Stickstoff oder insbesondere überhitzter Wasserdampf, vorteilhaft der am Kopf der Kolonne anfallende Wasserdampf verwendet wird.

Die Viskositätszahl, gemessen an einer 0,5 gew.-%igen Lösung in 96 %iger Schwefelsäure bei 23°C, liegt nach der Nachkondensation in fester Phase im allgemeinen im Bereich von 120 bis 500 ml/g, vorzugsweise von 130 bis 200 ml/g.

Die erfindungsgemäßen thermoplastischen Formmassen zeichnen sich durch ein insgesamt ausgewogenes Eigenschaftsspektrum, insbesondere durch gute Fließfähigkeit und Schwerentflammbarkeit aus. Sie eignen sich zur Herstellung von Fasern, Folien und Formkörpern.

Beispiele

Komponenten A

A1: Ein oxidiertes Polyethylen niedriger Dichte (LDPE), endgruppencarboxyliert mit ca. 4 bis 5 COOH-Gruppen pro Molekül und einem Molekulargewicht $\overline{M}_n$ (Zahlenmittel) von ca. 15 000 (Hoechst-Wachs® PED 191 der Hoechst AG).

A2: Ein endgruppencarboxyliertes Polyethylen hoher Dichte (HDPE) mit einem mittleren Molekulargewicht $\overline{M}_n$ von ca. 5000.

A3: Ein Copolymer aus 93 Gew.-% Ethylen und 7 Gew.-% Acrylsäure mit einem Molekulargewicht $\overline{M}_n$ von 12 000 (Poligen® EAS-1 der BASF Aktiengesellschaft).

Komponente C

Ein Polyamid-Präpolymeres, hergestellt nach dem in der EP-A-129 195 beschriebenen Verfahren, wobei 669,6 kg eines äquimolaren Adipinsäure/Hexamethylendiamin-Salzes bei 80°C in 330,4 kg Wasser gelöst und kontinuierlich in einem Rohrbündelreaktor mit einem Durchsatz entsprechend einer Polyamidmenge von 50 kg/h bei einer Temperatur von 283°C und einem Druck von 2,8 bar polykondensiert wurden. Das Produkt hatte eine Viskositätszahl von 58 ml/g, gemessen an einer 0,5 gew.-%igen Lösung in konzentrierter Schwefelsäure bei 23°C.

Beispiele 1 bis 5

Das Polyamid-Präpolymere (Komponente C) wurde als Schmelze mittels einer Austragsschnecke aus dem Abscheidegefäß der Polykondensationsanlage in einen Doppelschneckenextruder (ZSK 53 von Werner & Pfleiderer) eingebracht und mit den verschiedenen Komponenten A bei 280°C und 120 U/min gemischt. Anschließend wurde durch Anlegen von Vakuum entgast, wobei praktisch keine Nachkondensation eintrat. Das Produkt wurde als Strang ausgetragen, gekühlt, granuliert und mit überhitztem Wasserdampf bei einer Temperatur von 182°C und einer Verweilzeit von 11 Stunden nachkondensiert. Die Viskositätszahl lag bei 140 ml/g, gemessen an einer 0,5 gew.-%igen Lösung in konzentrierter Schwefelsäure bei 23°C.

Vergleichsbeispiele V1 bis V4

Es wurde wie in den Beispielen 1 bis 5 gearbeitet, jedoch wurden als Komponente A) carboxylgruppenhaltige Polyethylenwachse mit Molekulargewichten $\overline{M}_n$ größer 20 000 eingesetzt.

AV1: Ein Copolymer aus 90 Gew.-% Ethylen und 10 Gew.-% Acrylsäure mit einem Molekulargewicht $\overline{M}_n$ von 45 000 (Lucalen® H 6920 der BASF Aktiengesellschaft)

AV2: Ein Copolymer aus 92,7 Gew.-% Ethylen und 7,3 Gew.-% Acrylsäure mit einem Molekulargewicht $\overline{M}_n$ von 190 000 (Lucalen® A 3710 der BASF Aktiengesellschaft).

AV3: Ein Copolymer aus 60 Gew.-% Ethylen, 35 Gew.-% n-Butylacrylat und 5 Gew.-% Acrylsäure mit einem Schmelzindex MFI von 10,5 g/10 min (bei 190 °C und 2,16 kg Belastung), $\overline{M}_n$ von 120 000.

AV4: Ein Ethylen-Propylenkautschuk mit einem Gewichtsverhältnis von Ethylen:Propylen von 45:55, gepfropft mit 0,8 Gew.-% Maleinsäureanhydrid mit einem Schmelzindex MFI von 150 g/10 min (bei 230 °C und 2,16 kg Belastung), $\overline{M}_n$ von 150 000 (Exxelor® 1803 der Exxon Chemical).

Vergleichsbeispiel V5

Es wurde wie in den Beispielen 1 bis 5 gearbeitet, jedoch als Komponente A) Al-Tristearat (Alugel® von Bärlocher, München) eingearbeitet.

Vergleichsbeispiel V6

Es wurde wie in den Beispielen 1 bis 5 gearbeitet, jedoch ohne eine Komponente A)

Vergleichsbeispiele V7 und V8

Komponente C*

Ein Polyamid, das aus Einheiten, die sich von Hexamethylendiamin und Adipinsäure ableiten, besteht und eine Viskositätszahl von 145 ml/g (gemessen an einer 0,5 gew.-%igen Lösung in konentrierter Schwefelsäure bei 23 °C) aufweist (Ultramid® A3 der BASF Aktiengesellschaft).

Das Polyamid (Komponente C*) wurde als Granulat mit der Komponente A1 (V7) bzw. mit Al-Tristearat (Alugel® von Bärlocher, München) (V8) in einem Doppelschneckenextruder (ZSK 53 von Werner & Pfleiderer) bei einer Temperatur von 280 °C gemischt, als Strang ausgetragen, gekühlt und granuliert.

Von den Produkten wurde der Elastizitätsmodul (E-Modul) nach DIN 54 457, die Zugfestigkeit nach DIN 54 455 und der Melt Flow Index MFI nach DIN 53 735 (bei 285 °C und 5 kg Belastung) bestimmt. Die Durchstoßarbeit Wges wurde nach DIN 53 443 an bei 280 °C gespritzten, 2 mm dicken Rundscheiben mit einem Durchmesser von 60 mm bei einer Prüftemperatur von 23 °C bestimmt. An einem Testwerkzeug (Staubsaugerdeckel) wurde die schnellstmögliche Zykluszeit bei 280 °C ermittelt. Der Brandtest erfolgte nach UL94 (ANSI) an Flachstäben mit den Dicken. 0,8 mm/1,6 mm/3,2 mm.

Die Zusammensetzungen und die Eigenschaften sind in der Tabelle zusammengestellt.

Tabelle

| Bei-spiel | Zusammensetzung [Gew.-%] | E-Modul [kJ/m²] | Zug festig-keit [kJ/m²] | Wges [J/m] | Brandtest | Zyklus-zeit [sec] | MFI [g/10 min] |
|---|---|---|---|---|---|---|---|
| 1 | 1,0 A1    99,0 C | 3050 | 87 | 100 | V2/V-/V- | 30 | 140 |
| 2 | 2,0 A1    98,0 C | 2950 | 84 | 120 | V2/V2/V2 | 23 | 150 |
| 3 | 4,0 A1    96,0 C | 2900 | 81 | 120 | V2/V2/V2 | 22 | 166 |
| 4 | 2,0 A2    98,0 C | 2980 | 83 | 118 | V2/V2/V2 | 24 | 155 |
| 5 | 2,0 A3    98,0 C | 3000 | 84 | 120 | V2/V2/V2 | 23 | 165 |
| V1 | 2,0 AV1    98,0 C | 2980 | 85 | 130 | V2/V2/V- | 33 | 135 |
| V2 | 2,0 AV2    98,0 C | 3020 | 85 | 140 | V2/V2/V- | 38 | 120 |
| V3 | 2,0 AV3    98,0 C | 2900 | 82 | 140 | V-/V-/V- | 46 | 98 |
| V4 | 2,0 AV4    98,0 C | 2895 | 81 | 140 | V-/V-/V- | 44 | 101 |
| V5 | 0,7 Al-Tristearat    99,3 C | 3010 | 86 | 30 | V-/V-/V- | 44 | 105 |
| V6 | –    100,0 C | 3025 | 85 | 102 | V2/V2/V2 | 40 | 109 |
| V7 | 2,0 A1    98,0 C* | 2940 | 85 | 90 | V-/V-/V- | 24 | 140 |
| V8 | 0,7 Al-Tristearat    99,3 C* | 3025 | 86 | 38 | V2/V2/V2 | 28 | 160 |

**Patentansprüche**

1. Thermoplastische Formmassen, erhältlich durch Einmischen von

A) 0,5 bis 5 Gew.-% eines carboxylgruppenhaltigen Polyethylenwachses mit einem mittleren Molekulargewicht $\overline{M}_n$ (Zahlenmittelwert) von 500 bis 20 000
und
B) 0 bis 50 Gew. -% faser- oder teilchenförmige Füllstoffe oder deren Mischungen

in eine Schmelze von
C) 40 bis 99,5 Gew.-% eines Polyamid-Präpolymeren mit einer Viskositätszahl von 40 bis 80 ml/g und anschließender Nachkondensation in fester Phase.

2. Thermoplastische Formmassen nach Anspruch 1, dadurch gekennzeichnet, daß das Polyamid nach der Nachkondensation in fester Phase eine Viskositätszahl von mindestens 120 ml/g aufweist.

3. Verfahren zur Herstellung von thermoplastischen Formmassen gemäß den Verfahrensbedingungen von Anspruch 1.

4. Verwendung der thermoplastischen Formmassen gemäß den Ansprüchen 1 bis 2 zur Herstellung von Fasern, Folien und Formkörpern.

5. Formkörper, erhältlich aus thermoplastischen Formmassen gemäß den Ansprüchen 1 bis 2 als wesentliche Komponenten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 822 227 (K.H. HERMANN et al.) * Spalte 1, Zeile 50 - Spalte 2, Zeile 64; Spalte 3, Zeile 15-25; Ansprüche 1,2 * | 1-5 | C 08 L 77/00 C 08 K 5/09 |
| X,D | DD-A- 234 684 (VEB LEUNA-WERKE) * Beispiele * | 1,4,5 | |
| X,D | DE-A-2 348 840 (BASF) * ganzes Dokument * | 1,4,5 | |
| X | EP-A-0 164 767 (GENERAL ELECTRIC COMPANY) * Seite 2, Zeilen 2-20; Seite 4, Zeile 32 - Seite 5, Zeile 8; Beispiele * | 1,2,4,5 | |
| A | EP-A-0 054 761 (ALLIED CORPORATION) * Seite 4, Zeile 33 - Seite 7, Zeile 32; Beispiele 85-88; Ansprüche 6-9 * | 1,4,5 | |
| A | EP-A-0 129 195 (BASF) * ganzes Dokument * | 1-5 | RECHERCHIERTE SACHGEBIETE (Int. Cl.5) |
| A | EP-A-0 129 196 (BASF) * ganzes Dokument * | 1-5 | C 08 G C 08 L C 08 K |

Der vorliegende Recherchenbericht wurde für alle Patentansprüche erstellt

| Recherchenort | Abschlußdatum der Recherche | Prüfer |
|---|---|---|
| BERLIN | 09-09-1993 | BOEKER R B |